# FASCICULE DE BREVET EUROPEEN

(11) **EP 1 928 655 B1**
(45) Date de publication et mention de la délivrance du brevet: **06.08.2014**
(21) Numéro de dépôt: 06831248.7
(22) Date de dépôt: 29.09.2006
(51) Int. Cl.: B32B 27/34, B32B 25/04, B32B 27/32, B32B 1/08

(54) **STRUCTURE MULTICOUCHES A BASE DE CAOUTCHOUC ET DE COPOLYMERE GREFFE A BLOCS POLYAMIDES, ET SON UTILISATION COMME TUBES POUR CIRCUITS D'AIR CONDITIONNE ET DE REFROIDISSEMENT**
MEHRSCHICHTIGE STRUKTUR AUF BASIS VON KAUTSCHUK UND EINEM GEPFROPFTEN POLYAMIDBLOCKCOPOLYMER, UND DEREN VERWENDUNG ALS KLIMATISIERTE LUFT-UND KÜHLKREISLAUFRÖHRE
MULTILAYER STRUCTURE BASED ON RUBBER AND ON A GRAFT POLYAMIDE BLOCK COPOLYMER, AND ITS USE AS TUBES FOR CONDITIONED AIR AND COOLING CIRCUITS

(30) Priorité: 30.09.2005 FR 0509988; 09.11.2005 US 735229 P
(43) Date de publication de la demande: 11.06.2008
(73) Titulaire: ARKEMA FRANCE, 92700 Colombes (FR)
(72) Inventeur: BERTOUX, Franck, Wayne, PA 19087 (US); BAUMERT, Martin, F-27470 Serquigny (FR); EMAD, Mehdi, Mehran, Collegeville, PA 19426 (US); FLAT, Jean-Jacques, F-27170 Goupillières (FR)
(86) Numéro de dépôt international: PCT/FR2006/050961
(87) Numéro de publication internationale: WO 2007/039697

(56) Documents cités:
- WO-A-94/19638
- US-A1- 2003 124 289
- US-A1- 2003 199 635

## Description

La présente invention concerne une structure multicouches à base de caoutchouc et de copolymère greffé à blocs polyamides, comprenant différentes couches successives en matériaux de nature différente afin de lui conférer des propriétés thermomécaniques améliorées; cette structure trouve en particulier une utilisation privilégiée pour l'obtention des tubes multicouches de nature majoritaire élastomère comprenant au moins une couche barrière, particulièrement appropriés pour le transport de fluides ou gaz pour circuits d'air conditionné et de fluides pour circuits de refroidissement.

Cestubes ontune composition majoritaire en caoutchouc; le terme caoutchouc utilisé dans la suite de la présente demande désigne tout matériau élastomère vulcanisé, tel que le caoutchouc naturel ou latex, ainsi que les caoutchoucs synthétiques notamment les élastomères éthylène - propylène - mbber (EPR), les élastomèreséthylène -propylène diène (EPDM)), le chloroprène (CR), le caoutchouc styrène - butadiène (SBR), le caoutchoucnitrile, le caoutchoucbutyl le polybutadiène, les caoutchoucs époxide, etc. Ces tubes sont particulièrement destinés au transport de fluides ou gaz réfrigérants ou frigorigènes, tels que le CO2 et les hydrofluoroalcanes (HFA), en particulier dans des circuits de distribution d'air conditionné pour l'industrie automobile, ou dans le bâtiment.

Ces circuits de distribution comportent en général une ligne à haute température (environ 135°C) ethaute pression (environ 20 bars) et une ou plusieurs lignes à basse température et basse ou haute pression.

Une autre utilisation particulièrement utile concerne les tubes pour les circuits de refroidissement des moteurs à combustion interne tels que les moteurs des automobiles ou camions. Les liquides de refroidissement sont en général des solutions aqueuses d'alcools tels que par exemple de l'éthylène glycol, du diéthylène glycol ou du propylène glycol. Ces tubes doivent aussi avoir une bonne tenue mécanique et résister à l'environnement moteur (température, présente éventuelle d'huile).

### Art antérieur:

Pour cet usage, on connaît l'emploi des résines thermoplastiques à base de polyamide (PA) et copolyamides, en particulier du type PA-6, PA 6,6 et PA6/6.6, telque les résines Zytel ® de Du Pont; toutefois ces résignes polyamide présentent une tenue thermique (vieillissement thermique) insuffisante pour les applications envisagées.

Le document DE 92 03 865 U1 décrit un tube haute pression pour milieux fluides ou gazeux, comprenant une enveloppe extérieure résistant à la pression et une partie intérieure constituée de plusieurs couches de polyamide 6 ou 12, entre lesquelles est intercalée une couche de polypropylène fonctionnalisé ou une couche de copolymère éthylène- acétate de vinyle partiellement saponifié (EVOH); ce tube est utilisé notamment pour le transport de gazfréon.

Il est décrit dans le document WO 02/28959 un copolymère greffé à blocs polyamides sur un tronc en polyoléfine qui est choisi parmi les copolymères éthylène/ anhydride maléique et éthylène/(méth)acrylate d'alkyle/anhydride maléique, formant un alliage co-continu nanostructuré; cela confère à ce copolymère des propriétés thermo-mécaniques exceptionnelles, qui sont maintenues en redispersant ce copolymère greffé dans des polyoléfines souples telles que les polymères souples de l'éthylène.

De tels mélanges trouvent des applications comme adhésifs, films, bâches, produits calandrés, câbles électriques ou poudres pour des procédés de moulage d'objets ("slush-molding").

US 2003/124289 A1 décrit un tube multicouche pour le transport de fluides de systèmes d'air conditionné, comprenant dans sa direction radiale de l'extérieur vers l'intérieur: (i) une première couche d'élastomère vulcanisé formant la couche extérieure, (ii) une deuxième couche d'EVOH ou d'un mélange à base d'EVOH, (iii) une troisième couche d'un mélange de polyamide (A) et de polyoléfine (B) à matrice polyamide, possiblement une polyoléfine fonctionnalisée de type Lotader, (iv) une couche intérieure d'élastomère vulcanisé, les couches étant successives et adhérant entre-elles dans leur zone de contact respective. La couche à base d'EVOH (ii) contient également une résine polyéthylène greffée polyamide. La couche de mélange (iii) contient 3 à 10 % d'une polyoléfine résultant de la réaction d'un polyamide (C4) et d'un copolymère (C3), obtenu lui même à partir d'un polypropylène et d'un monomère X à greffer ou copolymériser. Le dit monomère X est un acide (méth)acrylique ou un anhydride d'acide dicarboxylique insaturé; le polyamide (C4) est préférentiellement un polyamide à extrémité monoamine.

La demanderesse a réussi, de manière surprenante, en combinant au moins une couche d'un copolymère greffé à blocs polyamides avec des couches de caoutchouc à obtenir une structure multicouches présentant une excellente stabilité et tenue thermique jusqu'à 200 °C, avec des propriétés mécaniques qui sont peu modifiées après un vieillissement jusqu'à cette température, tout en présentant une faible perméabilité aux fluides réfrigérants ou aux liquides de refroidissement.

Les propriétés originales et avantages de l'invention par rapport à l'état de la technique, en incorporant au moins une couche de copolymère greffé à blocs polyamides dans une structure multicouches, sont :
- la combinaison de la stabilité thermique, la stabilité à l'hydrolyse et la transformabilité thermoplastique,
- la meilleure te nue thermique que les résines PA utilisées à ce jour,
- une meilleure flexibilité (sans ajout de plastifiants) offrant de meilleures performances en réduction des vibrations et du bruit, et en résistance au croquage.
- l'amélioration de l'imperméabilité aux fluides ou gaz réfrigérants, tels que le CO2 et les hydrofluoroalcanes (HFA), notamment le R134ₐ, commercialisés sous la marque Forane® par ARKEMA, par rapport aux structures entièrement en caoutchouc.

Les propriétés barrière à ces fluides des tubes obtenus peuvent être améliorées en ajoutant aux couches à base de compositions thermoplastiques de l'invention, des nanocharges, notamment des argiles organophiles exfoliables de type la mellaire telles que des silicates (par exemple les argiles Nanomer® de Nanocor), qui après dispersion compléte sont de taille nanométrique («nanoclays »), ou en ajoutant une ou plusieurs couches d'autres matériaux barrière connus , tel que notamment des copolymères éthylene-acétate de vinyle partiellement saponifié (EVOH).

L'utilisation de nanocharges dans l'une ou plusieurs des couches des structures multicouches précédentes, en particulier pour l'obtention de tubes, permet aussi d'améliorer les caractéristiques mécaniques de ceux-ci, telles que notamment la résistance à la pression d'éclatement.

La présente invention concerne une structure multicouches à base de caoutchouc et de copolymère greffé à blocs polyamides, comprenant successivement:
a) éventuellement une première couche intérieure (1) formée d'un caoutchouc ou d'un polyamide,
b) au moins une couche (2) à base d'un copolymère greffé à blocs polyamides constitué d'un tronc en polyoléfine et d'au moins un greffon en polyamide dans lequel les greffons sont attachés au tronc parles restes d'un monomère insaturé (X) ayantune fonction capable de reagiravec un polyamide à extrémité amine, les restes du monomère insaturé (X) étant fixés sur le tronc par greffage ou copolymérisation depuis sa double liaison,
c) une deuxième couche (3) formée d'un caoutchouc,
d) éventuellement une couche de liant (4),
e) une couche extérieure (5) formée d'un caoutchouc.
f) éventuellement une couche de renfort (6) située entre deux des précédentes couches ou à l'intérieur de celles-ci

Selon l'invention, la structure multicouches comprend une deuxième couche (2') à base d'un copolymère greffé à blocs polyamides, cette couche étantdisposée entre la couche (2) et une couche de matériau barrière (6), tel que notamment un copolymère éthylène acétate de vinyle partiellement saponifié (EVOH).

Avantageusement, la structure multicouches comprend e n outre a u moins une couche (7) en polyamide.

Toutefois, les couches (2) et (2') peuvent être intercalées entre deux couches de polyamide (7) ou entre une couche de polyamide (7) et une couche de caoutchouc ou entre une couche de polyamide (7)etune autre couche barrière.

De préférence, dans cette structure multicouches les couches (2) et (2') à base d'un copolymère greffé à blocs polyamides comprennent aussi des nanocharges.

Cependant, les autres couches peuvent aussi contenir des nanocharges.

De préférence, X est un anhydride d'acide carboxylique insaturé, et le tronc en polyoléfine contenant X est choisi parmi les copolymères éthylène-anhydride maléique etéthylène - (méth)acrylate d'alkyle -anhydride maléique.

En outre, selon l'invention, les greffons polyamides sont du polyamide 6 mono NH₂ ou du copolyamide 6/11 mono NH₂.

En outre, dans la composition thermoplastique les greffons polyamides ont une masse molaire comprise entre 1000 et 5000g/mole.

Selon un mode de réalisation préféré de l'invention, les couches (2) et (2') à base d'un copolymère greffé à blocs polyamides comprennent en mélange des nanocharges.

De préférence, la structure multicouches comprend au moins une couche intérieure et une couche extérieure réalisées en caoutchouc en outre, elle peut comprendre une couche barrière supplémentaire, notamment en copolymère é thylè ne- acétate de vinyle partiellement saponifié (EVOH) ou en polyamide.

Selon une variante de réalisation, certaines couches composant ladite structure multicouches sont liées entre elles par une couche de liant.

On désigne par liant tout produit qui permet aux différentes couches d'adhérer entre elles, et notamment aux couches d'élastomère, tel que le caoutchouc. On peut utiliser tous les produits connus comme liants de coextrusion de ces matériaux.

Ces liants sont choisis avantageusement parmi les polyoléfines fonctionnalisées, les alliages à matrice PA et phase dispersée polyoléfine, ou les copolyamides.

En outre, une ou plusieurs couches de la structure p e uve nt être antistatiques. Ceci peut notamment être obtenu par ajout dans la composition de ces couches d'additifs ou charges comme par exemple du noir de carbone, des nanotubes de carbone ou des fibres métalliques.

La couche de renfort (6) peut être réalisée en fibres tressées, notamment en matériaux tels que le polyester ou en fils métalliques.

De préférence, les différentes couches sont réalisées par coextrusion, avec ou sans couche de liant entre celles-ci, en une ou plusieurs étapes, selon les techniques habituelles des thermoplastiques, pour former des tubes.

Ces tubes peuvent être lisses (de diamètre constant) ou être annelés ou comporter des parties annelées et des parties lisses.

Selon un mode de réalisation préféré, l'invention concerne des tubes pour les circuits d'air conditionné, notamment des véhicules automobiles, constitués de la structure multicouches précédente, dans lesquels les couches (2) et/ou (2') de copolymères greffés à blocs polyamides sont en couche interne ou intercalées entre deux couches de caoutchouc, ou entre une couche de caoutchouc et me autre couche barrière, ou entre deux couches de polyamide, ou entre une couche de polyamide et une couche de caoutchouc, ou entre une couche de polyamide et une autre couche barrière.

Plus particulièrement, le fluide transporté dans ces tubes est un fluid réfrigérant tel que notamment un hydrofluoroalcane, ou du CO₂.

Selon un autre mode de réalisation, l'invention concerne des tubes pour les circuits de refroidissement, constitués de la structure selon l'invention, dans lesquels les couches (2) et/ou (2') de copolymères greffés à blocs polyamides sont en couche interne ou intercalées entre deux couches de caoutchouc ou entre une couche de caoutchouc et une autre couche barrière ou entre deux couches de polyamide ou entre une couche de polyamide et une couche de caoutchouc ou entre une couche de polyamide etune autre couche barrière.

Ces circuits de refroidissement sont particulièrement appropriés pour les liquides de refroidissement des moteurs à combustion interne tels que les moteurs des véhicules automobiles ou camions. Les liquides de refroidissement sont en général des solutions aqueuses d'alcools tels que par exemple de l'éthylène glycol, du diéthylène glycol ou du propylène glycol.

Nous allons décrire de façon plus détaillée le constituant principal de la composition thermoplastique formant la ou l'une des couches ayant des propriétés barrière des tuyaux ou tubes, dont l'utilisation fait l'objet de la présente invention.

Sagissant du copolymère greffé à blocs polyamides il peut être obtenu par réaction d'un polyamide à extrémité amine avec les restes d'un monomère insaturé X fixé par greffage ou copolymérisation surun tronc en polyoléfine.

Ce monomère X peut être par exemple un époxyde insaturé ou un anhydride d'acide carboxylique insaturé. L'anhydride d'acide carboxylique insaturé peutêtre choisi parexemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé telque par exemple l'acide (méth)acrylique.

Des exemples d'époxydes insaturés sont :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbomène-2-méthyl-2-glycidyl carboxylate et l'endo cis-bicyclo(2,2,1)-5-heptène-2,3-diglycidyl dicarboxylate.

Sagissant du tronc en polyoléfine, on définit une polyoléfine comme un homo polymère ou copolymère d'alpha oléfines ou de dioléfines, telles que par exemple, éthylène, propylène, butène-1, octène-1, butadiène. A titre d'exemple, on peut citer:
- les homo polymères et copolymères du polyéthylène, en particulier IDPE, HDPE, LLDPE(linear low density polyéthylène, ou polyéthylène basse densité lineaire), VIDPE(very low density polyéthylène, ou polyéthylène très basse densité) et le polyéthylène métallocène.
   - les homopolymères ou copolymères du propylène.
   - les copolymères éthylène/alpha-oléfine tels qu'éthylène/propylène, les EPR(abréviation d'éthylène-propylene-rubber) et éthylène/propylène/diène (EPDM).
   - les copolymères blocs styrène/éthylène-butène/styrène (SEBS), styrène/butadiène/styrène (SBS), styrène/isoprène/stylée (SIS), styrène/éthylène-propylène/styrène (SEPS).
   - les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés telque l'acétate de vinyle, la proportion de comonomère pouvant atteindre 40 %en poids.

Avantageusement les troncs en polyoléfine sur lesquels sont attachés les restes de X sont des polyéthylènes greffés par X ou des copolymères de l'éthylène et de X qu'on obtient par exemple par polymérisation radicalaire.

Sagissant des polyéthylènes sur lesquels on vient greffer X on entend par polyéthylène deshomo-ou copolymères.

A titre de co-monomères, on peut citer:
- les alpha-oléfines, avantageusement celles ayant de 3 à 30 atomes de carbone. Desexemplesontété cités plus haut. Ces alpha-oléfines peuvent être utilisées seules ou en mélange de deux ou de plus de deux,
- les esters d'acides carboxyliques insaturés tels que parexemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de nbutyle, l'acrylate d'isobutyle, l'acrylate de 2-éthylhexyle,
- les esters vinyliques d'acides carboxyliques saturés tels que parexemple l'acétate ou le propionate de vinyle.
- lesdiènestelsque parexemple le 1,4-hexadiène.
- le polyéthylene peut comprendre plusieurs des comonomères précédents.

Avantageusement le polyéthylène qui peut être un mélange de plusieurs polymères, comprend au moins 50 % et de préférence 75 % (en moles) d'éthylène, sa densité peut être comprise entre 0,86 et 0,98 g/cm³. Le MFI (indice de viscosité à 190°C, 2,16 kg) est compris avantageusement entre 20 et 1000 g/10 min.

A titre d'exemple de polyéthylènes on peut citer:
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu parcatalyse métallocène,
- les élastomères EPR (éthylène -propylène -rubber)
- les élastomères EPDM (éthylène -propylène -diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.

S'agissant des copolymères de l'éthylène etde X c'est-à-dire ceux dans lesquels X n'est pas greffé il s'agit des copolymères de l'éthylène, de X et éventuellement d'un autre monomère pouvant être choisi parmi les comonomères qu'on a cité plus haut pour les copolymères de l'éthylène destinés à être greffés.

On utilise avantageusement les copolymères éthylène-anhydride maléique et éthylène -(méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 5 et 100 (mesuré à 190°C so us une pression de 2,16 kg). Les (méth)acrylates d'alkyle ontdéjà été décritsplushaut. La température de fusion est comprise entre 60 et 120°C.

Avantageusement il y a en moyenne au moins deux moles de X par chaîne attachées sur le tronc en polyoléfine et de préférence de 2 à 5. L'homme de métier peut déterminer facilement par analyse IRTF le nombre de ces moles X. Par exemple si X est l'anhydride maléique et la masse moléculaire en poids M_{w} = 95 000 g/moldu tronc en polyoléfine, on a trouvé que ceci correspondait à une proportion d'anhydride d'au moins 1,5 % en poids de l'ensemble du tronc de polyoléfine contenant X et de préférence de 2,5 à 4%. Ces valeurs associées à la masse des polyamides à terminaison amine déterminent la proportion de polyamide et de tronc dans le copolymère greffé à blocs polyamides.

Sagissant du polyamide à extrémité amine on entend par polyamide les produits de condensation:
- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame ;
- d'un ou plusieurs sels ou mélanges de diamines telles l'hexaméthylène-diamine, la dodécaméthylènediamine, la métaxylylènediamine, le b is-p aminocyclohexylméthane et la triméthylhexaméthylène diamine avec des diacides tels que les acides isophtalique, téléphtalique, adipique, azélaïque, subérique, sébacique et dodécanedicarboxylique :
- oudesmélangesde plusieurs monomères ce qui conduit à descopolyamides.

On peut utiliser des mélanges de polyamides. On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, hexaméthylènediamine et acide adipique (PA 6/6-6). L'avantage des copolyamides est qu'on peut ainsi choisir la température de fusion des greffons.

Le degré de polymérisation peut varier dans de larges proportions, selon sa valeur c'est un polyamide ou un oligomère de polyamide. Dans la suite du texte on utilisera indifféremment les deux expressions pour les greffons.

Po ur que le polyamide ait une terminaison mo no a mine il suffit d'utiliser un limite ur de chaîne de formule : 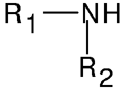 dans laquelle :
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oleylamine.

Avantageusement le polyamide à extrémité amine a une masse molaire comprise entre 1000 et 5000 g/mole et de préférence entre 2000 et 4000.

Les monomères amino-acides ou lactames préférés pour la synthèse de l'oligomère monoaminé selon l'invention sont choisis parmi le caprolactame, l'acide amino-11-undécanoïque ou le dodécalactame. Les limitateurs monofonctionnels de polymérisation préférés sont la laurylamine et l'oléylamine.

La polycondensation définie ci-dessus s'effectue selon les procédés habituellement connus, par exemple à une température comprise en général entre 200 et 300 °C, sous vide ou sous atmosphère inerte, avec agitation du mélange réactionnel La longueurde chaîne moyenne de l'oligomère est déterminée parle rapport molaire initial entre le monomère polycondensable ou le lactame et le limitateur monofonctionnel de polymérisation. Pour le calcul de la longueur de chaîne moyenne, on compte habituellement une molécule de limitateur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement X porte une fonction anhydride ou acide, on crée ainsi des liaisons amides ou imides.

On réalise l'addition de l'oligomère à extrémité amine sur le tronc de polyoléfine c ontenant Xde préférence à l'état fondu. On peut ainsi, dans une extrudeuse, malaxer l'oligomère et le tronc à une température généralement comprise entre 230 et 280 °C. Le temps de séjour moyen de la matière fondue dans l'extrudeuse peut être compris entre 15 secondes et 5 minutes, et de préférence entre 1 et 3 minutes. Le rendement de cette addition est évalué par extraction sélective des oligomères de polyamide libres c'est-à-dire ceux qui n'ont pas réagi pour former le copolymère greffé à blocs polyamides final.

Les proportions de tronc de polyoléfine contenant X (PO en abrégè) et de polyamide à extrémité amine (PA en abrégè) sont telles que : PO/PA est compris entre 55/45 et 90/10 et avantageusement entre 60/40 et 80/20.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamides utilisés dans les compositions thermoplastiques selon la présente invention sont caractérisés par une organisation nano-structurée avec des lamelles de polyamide d'épaisseur comprise entre 10 et 50 nanomètres.

Cescopolymèresontune très bonne résistance au fluage à des températures au moins égales à 80°C et pouvant aller jusqu'à 130°C, c'est à dire qu'ils ne présentent pas de rupture so us 25 kPa .

Les copolymères utilisés dans l'invention peuvent être préparés par mélange à l'état fondu dans des extrudeuses (mono ou bi-vis), des malaxeurs BUSS, des mélangeurs BRABENDER et en général les dispositifs habituels de mélange des thermoplastiques et de préférence les extrudeuses bi-vis.

Les compositions thermoplastiques utilisées selon l'invention peuvent comprendre a ussi des agents fluidifiants tels que de la silice, de l'éthylène-bis-amide, du stéarate de calcium ou du stéarate de magnésium. Ils peuvent aussi comprendre des agents stabilisants thermiques, des antioxydants, des anti UV., des charges minérales et des pigme nts de coloration.

Les compositions de l'invention peuvent être préparées en une étape dans une extrudeuse. Dans les premières zones on introduit le tronc contenant X (par exemple un copolymère éthylène-(meth)acrylate d'alkyle-anhydride maléique), le polyamide à extrémité amine puis quelques zones plus loin les additifs. On peut aussi introduire to us les ingrédients dans la première zone de l'extrudeuse.

### Description d'exemples de réalisation de l'invention :

Trois compositions thermoplastiques A, B et C se présentant sous forme d'alliage co-continu nanostructuré sont réalisées à partir des composants suivants dont les teneurs en parties en poids sont présentées dans le tableau 1 ci-dessous:

**Tableau 1:**

| | A | B | C |
|---|---|---|---|
| LOTADER 4700 | 80 | | |
| LOTADER 7500 | | 80 | |
| LOTADER3210 | | | 80 |
| PA 6 mono NH2 | 19 | 19 | 19 |
| Irgafos 168 | 0,5 | 0.5 | 0.5 |
| Irganox 1098 | 0,5 | 0.5 | 0.5 |

Le Lotader4700 ^{®} de ARKEMA est un terpolymère éthylène-acrylate d'éthyle (29% en poids)-anhydride maléique (1.5% poids), ayant un MFI de 7 (g/10 min mesuré à 190°C sous une charge de 2.16kg, selon la norme ASIM D 1238).

Le Lotader 7500 ® de ARKEMA est un terpolymère éthylène-acrylate d'éthyle (17.5% en poids)-anhydride maléique (2.9% poids), ayant un MFI de 70.

Le Lotader3210 ^{®} de ARKEMA est un terpolymère éthylène-acrylate de butyle (6% en poids)-anhydride maléique (3% poids), ayant un MFI de 5.

Le PA 6 mono NH2 a une masse moléculaire de 2500 g/mole,

Irganox 1098 est un anti-oxydant de CIBA,

Irgafos 168 est un agent stabilisant de CIBA.

Ces composants sont introduits dans une extrudeuse bi-vis co-rotative de type LEISTRITZ ^{®} ISM 306-34, ayant un profil de températures compris entre 240 et 280°C, le produit obtenu étant mis en sac après granulation.

Des essais de résistance à l'hydrolyse ont été réalisés, avec la composition A, d a ns les conditions suivantes:
variation des propriétés mécaniques après vieillissement dans l'eau/havoline à 130 °C, les propriétés mécaniques de contrainte à la rupture et d'allongement à la rupture sont mesurées à -30 °C :

| | Test -30°C 200mm/ s | Initial (*n*=5) | Vieillissement 1000 h - 130°C - Eau/Havoline | | | |
|---|---|---|---|---|---|---|
| | | | En immersion | | En phase vapeur | |
| | | | Mesure (*n*=*2*) | *Variation* | Mesure (*n*=*2*) | *Variation* |
| Composition A | Contrainte à la rupture (MPa) | 28,9 | 20,7 | -28% | 21,7 | -25% |
| | | *0* | *0*,*6* | | *2,4* | |
| | Allongement à la rupture (%) | 91 | 133 | 46% | 160 | 76% |
| | | *2* | *5* | | *43* | |

A titre de modes de réalisation préférés, les tuyaux ou tubes multicouches pour l'utilisation selon l'invention, peuvent se composer successivement radialement de l'intérieur vers l'extérieur:
- d'une couche de copolymère greffé à blocs polyamides de la composition A, B ou C, d'une couche de caoutchouc, d'une couche de renfort et d'une couche de caoutchouc de couverture.
- d'une couche d'élastomère ou caoutchouc (telque défini précédemment), d'une couche de copolymère greffé à blocs polyamides de la composition A, B ou C, d'une couche de caoutchouc, d'une couche de liant et d'une couche de caoutchouc de couverture,
- d'une couche de caoutchouc, d'une couche de la composition A, B ou C, contenant des nanocharges, d'une couche de caoutchouc, d'une couche de liant et d'une couche de caoutchouc de couverture,
- d'une couche de caoutchouc, d'une première couche de la composition A, B ou C, d'une couche de copolymère éthylène- acétate de vinyle partiellement saponifié (EVOH), d'une deuxième couche de la composition A, B ou C, d'une couche de caoutchouc d'une couche de liant et d'une couche de caoutchouc de couverture,
- d'une couche de PA, d'une couche de copolymère éthylène- acétate de vinyle partiellement saponifié (EVOH), d'une couche de la composition A, B ou C, d'une couche de caoutchouc, d'une couche de liant et d'une couche de caoutchouc de couverture.

Les différentes couches de caoutchouc peuvent être constituées d'un même matériaux ou de matériaux différents, choisis parmi ceux cités ci-dessus.

La structure multicouche selon l'invention peut comprendre au moins une couche en polyamide, notamment de type PA6 ou PA6-6, soit à la place de la première couche intérieure, soit disposée entre deux des différents couches successives.
Une ou plusieurs couches peuvent être antistatiques par ajout notamment de charges telles que du noir de carbone, des fibres métalliques ou des nanotubes de carbone. La structure permet ainsi la dissipation de charges électriques.

Au moins une couche de renfort peut également être intercalée à l'interface entre deux des couches précédentes ou à l'intérieur d'une des couches. Le renfort peut par exemple être constitué d'un treillis ou d'une tresse en fibres, notamment en matériaux tels que le polyesterou des fils métalliques.

Les épaisseurs des différentes couches sont en général différentes et adaptées en fonction des propriétés spécifiques recherchées pour les tubes ainsi obtenus.

Sagissant plus particulièrement du tube pour les circuits de refroidissement, il peut être parexemple de diamètre intérieur de 5 à 100 mm, de diamètre extérieur de 8 à 250 mm et d'épaisseur 1 à 10 mm. Quant à l'épaisseur des couches on a avantageusement 30 à 95% de l'épaisseur totale pour les couches (1), (3) ou (5), 5 à 60% pour les couches (2) et/ou (2'), et le complément pour les autres couches.

A titre d'exemple non limitatif, pour les tubes selon l'invention, les épaisseurs des couches peuvent varier entre 10 e t 500 µm.
La formation de ces structures multicouches pour l'obtention de tubes est réalisée par coextrusion, avec ousanscouche de liant entre celles-ci, et en une ou plusieurs étapes.

Des essais de perméabilité aux agents réfrigérants du type CO₂ ou HFA utilisés dans les circuits d'air conditionné pour véhicules automobiles, pour les différentes structures décrites montrent des valeurs supérieures par rapport aux tubes réalisés en caoutchouc et polyamide.

On peut aussi envisager l'utilisation des structures multicouches de l'invention pourdes tubes pour les circuits d'air conditionné dans tout type de véhicule ou moyen de transport, ainsi que le bâtiment.

## Revendications

1. Structure multicouches à base de caoutchouc et de copolymère greffé à blocs polyamides, comprenant successivement :
- a) éventuellement une première couche intérieure (1) formée d'un caoutchouc ou d'un polyamide,
- b) au moins une couche (2) ayant comme composant principal un copolymère greffé à blocs polyamides constitué d'un tronc en polyoléfine et d'au moins un greffon en polyamide dans lequel les greffons sont attachés au tronc par les restes d'un monomère insaturé (X) ayant une fonction capable de réagir avec un polyamide à extrémité amine, les restes du monomère insaturé (X) étant fixés sur le tronc par greffage ou copolymérisation depuis sa double liaison,
- c) une deuxième couche (3) formée d'un caoutchouc,
- d) éventuellement une couche de liant (4),
- e) une couche extérieure (5) formée d'un caoutchouc,
- f) éventuellement une couche de renfort située entre deux des précédentes couches ou à l'intérieur de celles-ci.

2. Structure multicouches selon la revendication 1, comprenant une deuxième couche (2') à base d'un copolymère greffé à blocs polyamides, cette couche étant disposée entre la couche (2) et une couche de matériau barrière (6), tel que notamment un copolymère éthylène- acétate de vinyle partiellement saponifié (EVOH).

3. Structure multicouches selon les revendications 1 ou 2, dans laquelle une ou plusieurs couches comprennent aussi des nanocharges.

4. Structure multicouches selon l'une des revendications 1 à 3, comprenant en outre une couche (7) en polyamide.

5. Structure multicouches selon l'une des revendications 1 à 4, dans laquelle au moins une des couches contient des additifs permettant la dissipation des charges électriques.

6. Structure multicouches selon l'une quelconque des revendications précédentes dans laquelle X est un anhydride d'acide carboxylique insaturé.

7. Structure multicouches selon l'une quelconque des revendications précédentes dans laquelle le tronc en polyoléfine contenant X est choisi parmi les copolymères éthylène-anhydride maléique et éthylène - (méth)acrylate d'alkyle - anhydride maléique.

8. Structure multicouches selon l'une quelconque des revendications précédentes dans laquelle les greffons polyamides sont du polyamide 6 monoNH₂ ou du copolyamide 6/11 monoNH₂.

9. Tubes pour les circuits d'air conditionné, notamment des véhicules automobiles, constitués de la structure selon l'une quelconque des revendications précédentes, dans lesquels les couches (2) et/ou (2') de copolymères greffés à blocs polyamides sont en couche interne ou intercalées entre deux couches de caoutchouc ou entre une couche de caoutchouc et une autre couche barrière ou entre deux couches de polyamide ou entre une couche de polyamide et une couche de caoutchouc ou entre une couche de polyamide et une autre couche barrière.

10. Tubes selon la revendication 10, dans lesquels le fluide transporté est un fluide réfrigérant tel qu'un hydrofluoroalcane ou du CO₂.

11. Tubes pour les circuits de refroidissement des moteurs à combustion interne tels que les moteurs des véhicules automobiles ou camions, constitués de la structure selon l'une quelconque des revendications 1 à 9, dans lesquels les couches (2) et/ou (2') de copolymères greffés à blocs polyamides sont en couche interne ou intercalées entre deux couches de caoutchouc ou entre une couche de caoutchouc et une autre couche barrière ou entre deux couches de polyamide ou entre une couche de polyamide et une couche de caoutchouc ou entre une couche de polyamide et une autre couche barrière.

12. Tubes selon la revendication 11, dans lesquels le fluide transporté est un liquide de refroidissement sous forme de solutions aqueuses d'alcools tels que de l'éthylène glycol, du diéthylène glycol ou du propylène glycol.

## Patentansprüche

1. Mehrschichtstruktur auf Basis von Kautschuk und Pfropfcopolymer mit Polyamidblöcken, umfassend nacheinander:
- a) gegebenenfalls eine erste innere Schicht (1) aus einem Kautschuk oder einem Polyamid,
- b) mindestens eine Schicht (2), die als Hauptbestandteil ein Pfropfcopolymer mit Polyamidblöcken aufweist, das aus einer Polyolefin-Hauptkette und mindestens einem Polyamid-Pfropfanteil besteht, wobei die Pfropfanteile über die Reste eines ungesättigten Monomers (X) mit einer Funktion, die mit einem Polyamid mit einer Amin-Endgruppe reagieren kann, an die Hauptkette gebunden sind und die Reste des ungesättigten Monomers (X) durch Pfropfung oder Copolymerisation über seine Doppelbindung an der Hauptkette fixiert sind,
c) eine zweite Schicht (3) aus einem Kautschuk,
d) gegebenenfalls eine Bindemittelschicht (4),
e) eine äußere Schicht (5) aus einem Kautschuk,
f) gegebenenfalls eine Verstärkungsschicht, die sich zwischen zwei der vorhergehenden Schichten oder im Inneren der Schichten befindet.

2. Mehrschichtstruktur nach Anspruch 1, umfassend eine zweite Schicht (2') auf Basis eines Pfropfcopolymers mit Polyamidblöcken, wobei diese Schicht zwischen der Schicht (2) und einer Barrierematerialschicht (6), wie insbesondere einem teilverseiften Ethylen-Vinylacetat-Copolymer (EVOH), angeordnet ist.

3. Mehrschichtstruktur nach Anspruch 1 oder 2, wobei eine oder mehrere Schichten außerdem Nanofüllstoffe umfassen.

4. Mehrschichtstruktur nach einem der Ansprüche 1 bis 3, die ferner eine Schicht (7) aus Polyamid umfasst.

5. Mehrschichtstruktur nach einem der Ansprüche 1 bis 4, wobei mindestens eine der Schichten Additive, die die Ableitung von elektrischen Ladungen ermöglichen, umfasst.

6. Mehrschichtstruktur nach einem der vorhergehenden Ansprüche, wobei es sich bei X um ein ungesättigtes Carbonsäureanhydrid handelt.

7. Mehrschichtstruktur nach einem der vorhergehenden Ansprüche, wobei die X enthaltende Polyolefin-Hauptkette unter Ethylen-Maleinsäureanhydrid-Copolymeren und Ethylen-Alkyl(meth)acrylat-Maleinsäureanhydrid-Copolymeren ausgewählt ist.

8. Mehrschichtstruktur nach einem der vorhergehenden Ansprüche, wobei es sich bei den Polyamid-Pfropfanteilen um Mono-NH₂-Polyamid 6 oder Mono-NH₂-Copolyamid 6/11 handelt.

9. Rohre für Klimaanlagenkreisläufe, insbesondere von Autos, bestehend aus der Struktur nach einem der vorhergehenden Ansprüche, wobei die Schichten (2) und/oder (2') aus Pfropfcopolymeren mit Polyamidblöcken sich in der inneren Schicht befinden oder zwischen zwei Schichten aus Kautschuk oder zwischen einer Schicht aus Kautschuk und einer anderen Barriereschicht oder zwischen zwei Schichten aus Polyamid oder zwischen einer Schicht aus Polyamid und einer Schicht aus Kautschuk oder zwischen einer Schicht aus Polyamid und einer anderen Barrierschicht eingeschoben sind.

10. Rohre nach Anspruch 10, wobei es sich bei dem transportierten Fluid um ein Kältemittelfluid wie ein Hydrofluoralkan oder CO₂ handelt.

11. Rohre für Kühlkreisläufe von Verbrennungsmotoren wie Fahrzeug- oder Lastwagenmotoren, bestehend aus der Struktur nach einem der Ansprüche 1 bis 9, wobei die Schichten (2) und/oder (2') aus Pfropfcopolymeren mit Polyamidblöcken sich in der inneren Schicht befinden oder zwischen zwei Schichten aus Kautschuk oder zwischen einer Schicht aus Kautschuk und einer anderen Barriereschicht oder zwischen zwei Schichten aus Polyamid oder zwischen einer Schicht aus Polyamid und einer Schicht aus Kautschuk oder zwischen einer Schicht aus Polyamid und einer anderen Barrierschicht eingeschoben sind.

12. Rohre nach Anspruch 11, wobei es sich bei dem transportierten Fluid um eine Kühlflüssigkeit in Form von wässrigen Lösungen von Alkoholen wie Ethylenglykol, Diethylenglykol oder Propylenglykol handelt.

## Claims

1. Multilayer structure based on rubber and on polyamide-block graft copolymer, comprising in succession:
- a) optionally a first, inner layer (1) formed of a rubber or of a polyamide,
- b) at least one layer (2) having as main constituent a polyamide-block graft copolymer composed of a polyolefin backbone and at least one polyamide graft, wherein the grafts are attached to the backbone by the residues of an unsaturated monomer (X) having a function which is capable of reacting with an amine-terminated polyamide, the residues of the unsaturated monomer (X) being attached to the backbone by grafting or copolymerization via its double bond,
- c) a second layer (3) formed of a rubber,
- d) optionally a binder layer (4),
- e) an outer layer (5) formed of a rubber,
- f) optionally a reinforcing layer situated between two of the preceding layers or within said layers.

2. Multilayer structure according to Claim 1, comprising a second layer (2') based on a polyamide-block graft copolymer, this layer being disposed between the layer (2) and a barrier-material layer (6), such as, more particularly, a partially saponified ethylene-vinyl acetate copolymer (EVOH).

3. Multilayer structure according to Claim 1 or 2, wherein one or more layers further comprise nanofillers.

4. Multilayer structure according to any one of Claims 1 to 3, further comprising a polyamide layer (7).

5. Multilayer structure according to any one of Claims 1 to 4, wherein at least one of the layers comprises additives which permit the dissipation of electrical charges.

6. Multilayer structure according to any one of the preceding claims, wherein X is an unsaturated carboxylic acid anhydride.

7. Multilayer structure according to any one of the preceding claims, wherein the polyolefin backbone containing X is selected from ethylene-maleic anhydride and ethylene-alkyl (meth)acrylate-maleic anhydride copolymers.

8. Multilayer structure according to any one of the preceding claims, wherein the polyamide grafts are mono-NH₂ polyamide 6 or mono-NH₂ copolyamide 6/11.

9. Tubes for conditioned-air circuits, more particularly of automobiles, composed of the structure according to any one of the preceding claims, wherein the layers (2) and/or (2') of polyamide-block graft copolymers are in an inner layer or intercalated between two layers of rubber or between one layer of rubber and one other barrier layer or between two layers of polyamide or between one layer of polyamide and one layer of rubber or between one layer of polyamide and one other barrier layer.

10. Tubes according to Claim 10, wherein the fluid transported is a refrigerant fluid such as a hydrofluoroalkane or CO₂.

11. Tubes for the cooling circuits of internal-combustion engines such as the engines of automobiles or trucks, composed of the structure according to any one of Claims 1 to 9, wherein the layers (2) and/or (2') of polyamide-block graft copolymers are in an inner layer or intercalated between two layers of rubber or between one layer of rubber and one other barrier layer or between two layers of polyamide or between one layer of polyamide and one layer of rubber or between one layer of polyamide and one other barrier layer.

12. Tubes according to Claim 11, wherein the fluid transported is a cooling liquid in the form of aqueous solutions of alcohols such as ethylene glycol, diethylene glycol or propylene glycol.
